# EUROPEAN PATENT APPLICATION

(11) **EP 3 909 863 A1**
(43) Date of publication of application: **17.11.2021**
(21) Application number: 20173945.5
(22) Date of filing: 11.05.2020
(51) Int. Cl.: B64F 1/36

(54) **METHOD AND SYSTEM FOR GUIDING POSITION OF AIRCRAFT BAGGAGE**

(71) Applicant: Park, Dong Keun, Incheon 22229 (KR)
(72) Inventor: PARK, Dong Keun, Incheon 22229 (KR); JEONG, Jae won, Seoul 04604 (KR); KANG, Seok Chan, Gyeonggi-do 14034 (KR); PARK, Seong Keun, Incheon 22229 (KR)
(74) Representative: Kilner, Matthew Simon

(57) **Abstract**

Provided is a method for guiding position of aircraft baggage, the method allowing baggage information to be recognized through an electronic tag attached to baggage to determine whether the baggage has arrived at a destination and, upon determining that the baggage has arrived at the destination, calculating baggage location information and transmitting the obtained baggage location information to a terminal of a passenger and, upon determining that the baggage has not arrived at the destination, transmitting baggage misdelivery guide information to the terminal of the passenger.

## Description

### BACKGROUND

### 1. Field of the Invention

The present invention relates to a method and a system for guiding position of aircraft baggage, and more specifically, to a method and a system for guiding position of aircraft baggage allowing baggage information to be recognized through an electronic tag attached to baggage to determine whether the baggage has arrived at a destination and, upon determining that the baggage has arrived at the destination, calculating baggage location information and transmitting the obtained baggage location information to a terminal of a passenger and, upon determining that the baggage has not arrived at the destination, transmitting baggage misdelivery guide information to the terminal of the passenger.

### 2. Discussion of Related Art

Airplanes are being increasingly used as a transportation method.

When using airplanes, baggage of a certain weight or more is not allowed to be brought into the airplane, and thus a certain amount of baggage or particular baggage need to be carried as cargo.

The baggage carried as cargo may have a risk of being mixed with baggage of other users and lost, which may cause users anxiety.

Accordingly, various technology for managing baggage at the airport has been developed.

However, the related arts are mainly concerned with managing the route of baggage movement at the airport, and thus, when baggage is misdelivered to another airport, the user has difficulty in identifying information related to the baggage and no way of resolving the anxiety about losing the baggage.

### SUMMARY OF THE INVENTION

The present invention provides a method and a system for guiding position of aircraft baggage that allow a distance to a destination of baggage and a speed of a conveyor transport belt in a process of handling the baggage to be identified and allows a user to be notified with an expected time of arrival of the baggage through a text message, a web-based text message, and a social network service (SNS), thereby providing the user with information related to the baggage and enabling the user to relieve his or her anxiety about losing the baggage.

The present invention provides a method and a system for guiding position of aircraft baggage that allow a user to immediately identify that baggage of the user has been misdelivered upon arriving at a destination airport.

The technical objectives of the present invention are not limited to the above, and other objectives may become apparent to those of ordinary skill in the art based on the following description.

According to one aspect of the present invention, there is provided a method for guiding a position of aircraft baggage, the method comprising: by an airport management server, receiving baggage recognition information including reader identification information and baggage information of baggage from a reader and determining whether the baggage has arrived at a destination through the baggage recognition information; by the airport management server, transmitting baggage misdelivery information including airport identification information and the baggage information to a baggage management server upon determining that the baggage has not arrived at the destination; and by the baggage management server, transmitting information regarding a handling status of the baggage to the terminal of the passenger, wherein the transmitting of the information regarding the handling status of the baggage to the terminal of the passenger includes, in a misdelivered baggage case, by the baggage management server, searching for an earliest flight traveling from the airport to the destination or a delivery place set by the passenger and transmitting misdelivered baggage delivery schedule information including the found flight and an expected time of arrival of the found flight to the terminal of the passenger.

According to another aspect of the present invention, there is provided a system for guiding a position of aircraft baggage, the system comprising: an electronic tag which is attached to baggage of each passenger and in which baggage information is stored; a reader installed at one side of a conveyor that automatically moves the baggage to a gate to recognize the electronic tag attached to the baggage passing therethrough; an airport management server installed at each airport and configured to receive baggage recognition information including reader identification information and baggage information from the reader, determine whether the baggage has arrived at a destination through the baggage recognition information, and, according to a result of the determination, transmit information of the position of the baggage to a terminal of the passenger corresponding to the baggage or baggage misdelivery information to a baggage management server; and the baggage management server configured to be connected to the airport management server installed at each airport via a communication network, wherein the airport management server or the baggage management server is configured to: provide the passenger with baggage handling status information regarding at least one of check-in, transit, and arrival of the baggage that are performed in the corresponding airport; and in a misdelivered baggage case, search for an earliest flight traveling from the airport to the destination or a delivery place set by the passenger, and transmit misdelivered baggage delivery schedule information including the found flight and an expected time of arrival of the found flight to the terminal of the passenger.

### BRIEF DESCRIPTION OF THE DRAWINGS

FIG. 1 is an exemplary view for describing a baggage handling process in the case of a direct flight according to an embodiment of the present invention.
FIG. 2 is an exemplary view for describing a baggage handling process in an indirect flight where baggage is automatically handled according to an embodiment of the present invention.
FIG. 3 is an exemplary view illustrating a text message in a case when baggage has normally arrived at a transit airport shown in FIG. 2.
FIG. 4 is an exemplary view for describing a baggage handling process in an indirect flight where a passenger directly performs transit according to an embodiment of the present invention.
FIG. 5 is an exemplary view illustrating a text message in a case when baggage has normally arrived at a transit airport shown in FIG. 4.
FIG. 6 is an exemplary view illustrating a screen for comprehensively providing handling processes in all sections through an application according to an embodiment of the present invention.
FIG. 7 is an exemplary view for describing a baggage handling process according to an embodiment of the present invention.
FIG. 8 is a view for describing a system for guiding a position of baggage according to an embodiment of the present invention.
FIG. 9 is an exemplary view illustrating a screen advertising and executing a baggage tracking program according to an embodiment of the present invention.
FIG. 10 is a view illustrating an example of a baggage information screen transmitted by a system for guiding a position of baggage according to an embodiment of the present invention.
FIG. 11 is a view for describing a system for guiding a position of baggageaccording to another embodiment of the present invention.
FIG. 12 is an exemplary view illustrating baggage delay guide information according to an embodiment of the present invention.
FIG. 13 is an exemplary view illustrating baggage misdelivery guide information according to an embodiment of the present invention.
FIG. 14 is an exemplary view illustrating information indicating a failure of normal baggage handling according to an embodiment of the present invention.
FIG. 15 is an exemplary view illustrating information indicating a delay of normal baggage handling according to an embodiment of the present invention is delayed.
FIG. 16 is an exemplary view illustrating information indicating recognition of baggage misdelivery according to an embodiment of the present invention.
FIG. 17 is a block diagram for describing an airport management server according to an embodiment of the present invention.
FIG. 18 is a block diagram for describing a baggage management server according to an embodiment of the present invention.
FIG. 19 is a view for describing a method of guiding a posion of baggage according to an embodiment of the present invention.

### DETAILED DESCRIPTION OF EXEMPLARY EMBODIMENTS

Hereinafter, a system and method for airport baggage management according to embodiments of the present invention will be described in detail with reference to the accompanying drawings. The thickness of each line or the size of each component shown in the drawings may be exaggerated for the purpose of clarity and convenience.

Although terms used herein are selected from among general terms that are currently and widely used in consideration of functions in the exemplary embodiments, these may be changed according to intentions or customs of those skilled in the art or the advent of new technology. Therefore, the meanings of the terms used herein should be interpreted based on substantial meanings of the terms and content of this entire specification, rather than simply the terms themselves.

The implementations described herein may be implemented in, for example, a method or process, an apparatus, or a software program. Even when only discussed in the context of a single form of implementation (for example, discussed only as a method), the implementation of features discussed may also be implemented in other forms (for example, an apparatus or program). An apparatus may also be implemented in appropriate hardware, software, and firmware. The methods may be implemented in, for example, an apparatus such as a processor, which refers to processing devices in general, including a computer, a microprocessor, an integrated circuit, or a programmable logic device. Processing devices also include communication devices such as computers, cellular phones, portable/personal digital assistants (PDAs), and other devices that facilitate communication of information between end-users.

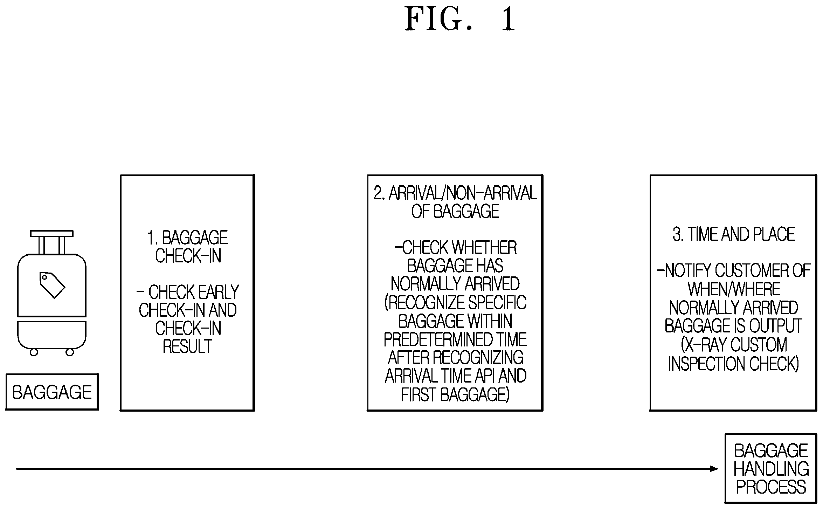

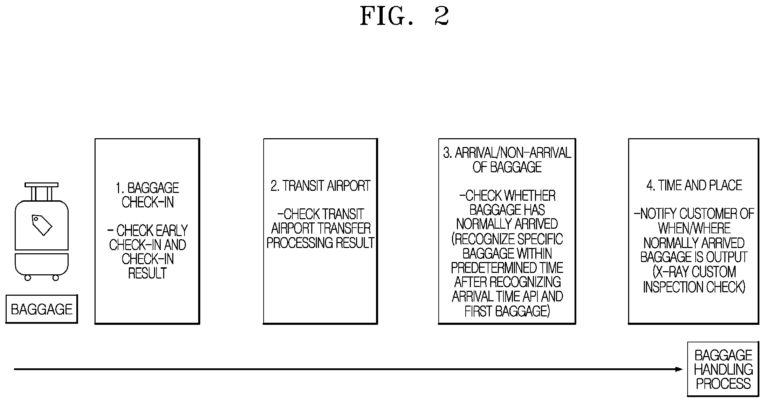

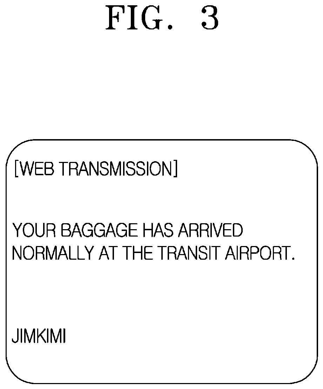

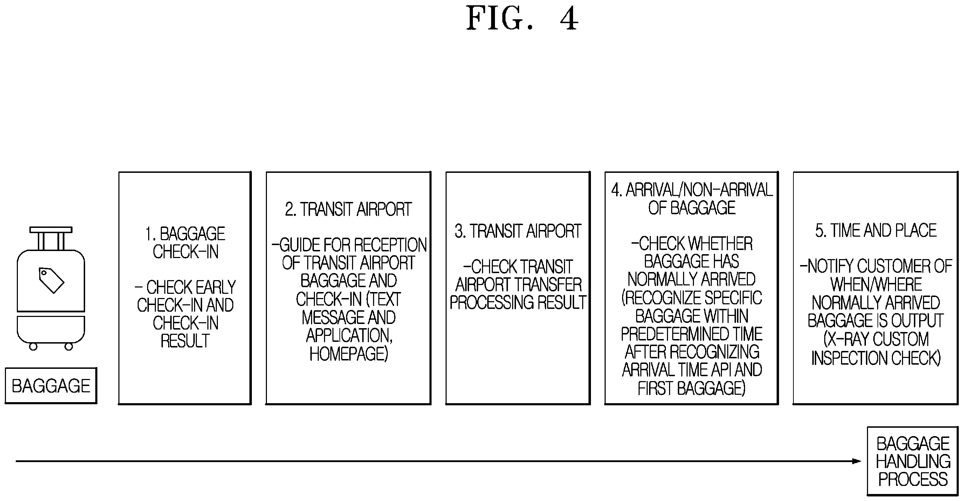

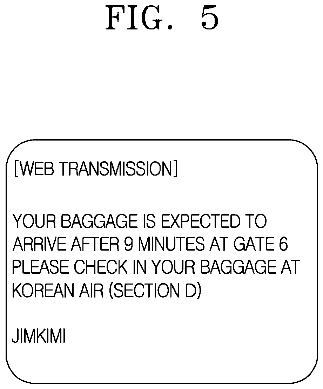

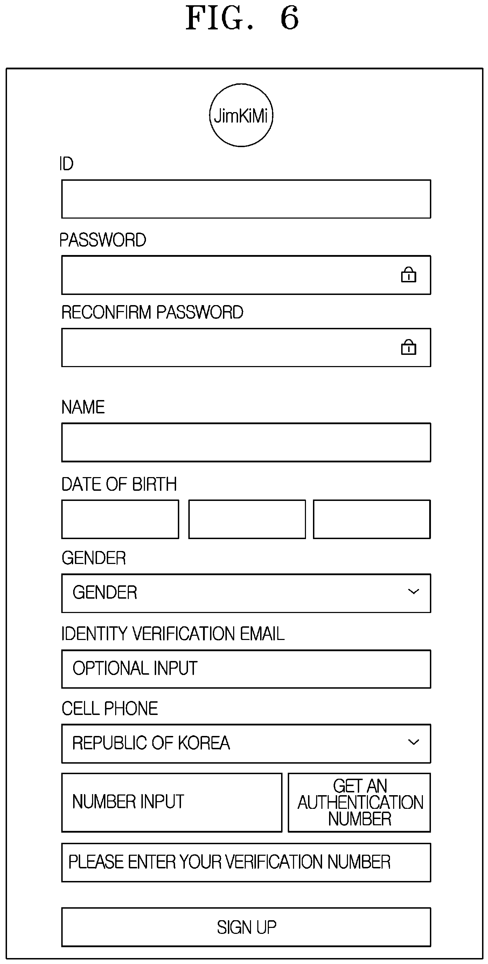

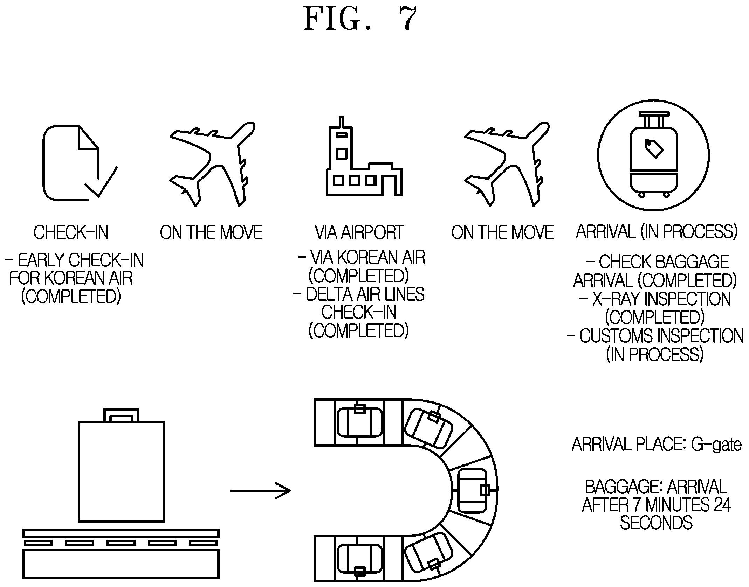

FIG. 1 is an exemplary view for describing a baggage handling process in the case of a direct flight according to an embodiment of the present invention, FIG. 2 is an exemplary view for describing a baggage handling process in an indirect flight where baggage is automatically handled according to an embodiment of the present invention, FIG. 3 is an exemplary view illustrating a text message in a case when baggage has normally arrived at a transit airport shown in FIG. 2, FIG. 4 is an exemplary view for describing a baggage handling process in an indirect flight where a passenger directly performs transit according to an embodiment of the present invention, FIG. 5 is an exemplary view illustrating a text message in a case when baggage has normally arrived at a transit airport shown in FIG. 4, FIG. 6 is an exemplary view illustrating a screen for comprehensively providing handling processes in all sections through an application according to an embodiment of the present invention, and FIG. 7 is an exemplary view for describing a baggage handling process according to an embodiment of the present invention.

The baggage handling process may be divided into three types of baggage handling processes for a direct flight, a transit airport where baggage is automatically handled, and a transit airport where passengers directly handle transit processing.

First, a baggage handling process in the case of a direct flight will be described. In the case of a direct flight, the airport management server 100 or the baggage management server 200 may notify a passenger of (1) check-in (including early check-in), (2) arrival/non-arrival of baggage and gate information, and (3) gate information and arrival time as shown in FIG. 1. In the process (3), when the baggage is finished with X-ray, customs check, and other processes, the baggage is identified as being finished by comparison with the airport management server 100 or airport facilities, such as an RFID, an RFID reader, a barcode tag reader, a camera, and the like, through at least one method, and the handling result is provided to be viewed on a homepage and an application.

Next, a transit flight with respect to automatically handling baggage will be described. In the case of automatically handling baggage during a transit, the airport management server 100 or the baggage management server 200 may notify a passenger of (1) check-in (including early check-in), (2) baggage handling at a transit airport (check-in confirmation of transit baggage), (3) arrival/non-arrival of baggage and gate information, and (4) gate information and arrival time as shown in FIG. 2. In the process (2), when the baggage has normally arrived at the transit airport, the airport management server 100 may transmit a text message that the baggage has normally arrived at the transit airport to the passenger as shown in FIG. 3. When the baggage has not normally arrived at the transit airport, the baggage handling at the transit airport is the same as the baggage handling at the destination (the destination airport), so the description thereof will be described later. The process (3), that is, the baggage handling at the arrival airport, is the same as the baggage handling at the destination (the destination airport), so the description thereof will be described later. The process (4) is the same as the process (3) of FIG. 1, so the description thereof will be omitted.

Lastly, a baggage handling process at a transit airport, in which a passenger directly handles a transfer, will be described. When a passenger directly receives baggage at a transit airport and has the baggage checked in again, as shown FIG. 4, the airport management server 100 or the baggage management server 200 may notify a passenger of (1) check-in (including early check-in), (2) baggage handling at a transit airport (check-in confirmation of transit baggage), (3) transfer handling at a transfer airport, (4) arrival/non-arrival of baggage and gate information, and (5) gate information and arrival time. In this case, the baggage handling process at the transit airport is similar to the automatic baggage handling at the transit airport except that receiving the baggage during transit and having the baggage checked-in again are added. That is, a process "guiding when and where the baggage is output" and a process "guiding when and where the baggage needs to be checked in" are added. Accordingly, the airport management server 100 or the baggage management server 200 transmits information related to when/where to receive the baggage and have the baggage checked-in at the transit airport as shown in FIG. 5, to the terminal 40 of the passenger, and may also deliver the information via an application or homepage. With such a service, the passenger may use all the same services as those applied to a direct-flight even in use of a transit flight.

The provision of the comprehensive information described above is achieved by a method of receiving a notification of a handling process for each section as a text message, a method of receiving the text message only for a section where an error has occurred, a method of having the handling processes of all the sections comprehensively viewable through an application and a homepage, and the like.

First, the method of receiving a notification of a handling process of each section as a text message may be a method of transmitting all processes of baggage handling as a text message. The method needs to receive a large number of text messages but allows all the processes to be checked regardless of a state of data roaming or Wi-Fi connection.

Next, the method of receiving the text message only for a section where an error has occurred will be described. The method may be a method of providing a text message to the passenger about when and where the baggage is output, which is the last process when the baggage arrives normally. However, when the baggage is not normally handled in the intermediate process, the airport management server 100 or the baggage management server 200 may transmit information related to the error having occurred in the corresponding section to the passenger as a text message. When an error occurs, the airport management server 100 or the baggage management server 200 notifies the passenger of the corresponding process, and at the same time, transmits a text message of the baggage handling status at a predetermined time interval in order to inform the passenger of the baggage handling status, and when the error is resolved, transmits details of the error resolved as a text message.

Lastly, the service of having the handling processes of all sections comprehensively viewable through an application and homepage will be described. The method uses a layout method as shown in FIG. 6 on a baggage management application and homepage, and with such a configuration, the passenger may identify the baggage handling process in more detail than that in a text message, as shown in FIG. 7. A method of identifying passenger information from the application and homepage may include using ID login, airline ticket barcode, airline ticket name, flight number, and the like, one or more of which may be used for identifying the passenger information, and other additional methods may be used for the identifying the passenger information.

In addition, on the application and the homepage, information related to the place of arrival and the required time of the baggage sent by the text message is synchronized. In this case, it is assumed that eight minutes remains until the expected time of arrival, a time after eight minutes is linked to a stopwatch (a timer), and the corresponding information is posted on the homepage and application to inform the passenger of the remaining time until the arrival of the baggage. However, when the speed of the conveyor belt in the airport changes or an error occurs, the time may be adjusted by installing a sensor or reader at an intermediate point of the conveyor belt.

When passengers apply for the comprehensive information service, the passenger may select his or her preferred language, and the airport management server 100 and baggage management server 200 may provide the comprehensive information in the most convenient language for the passenger, such as Korean, English, Chinese, Japanese, and other foreign languages.

As such, the system for airport baggage management may provide a higher quality of service to passengers, rapidly determine the arrival/non-arrival of baggage, and reduce the waiting and processing time in the event of error of baggage handling. In addition, the system for airport baggage management may reduce the risk of losing baggage and thus prevent loss of baggage, thereby rendering overall aviation lifestyle pleasant.

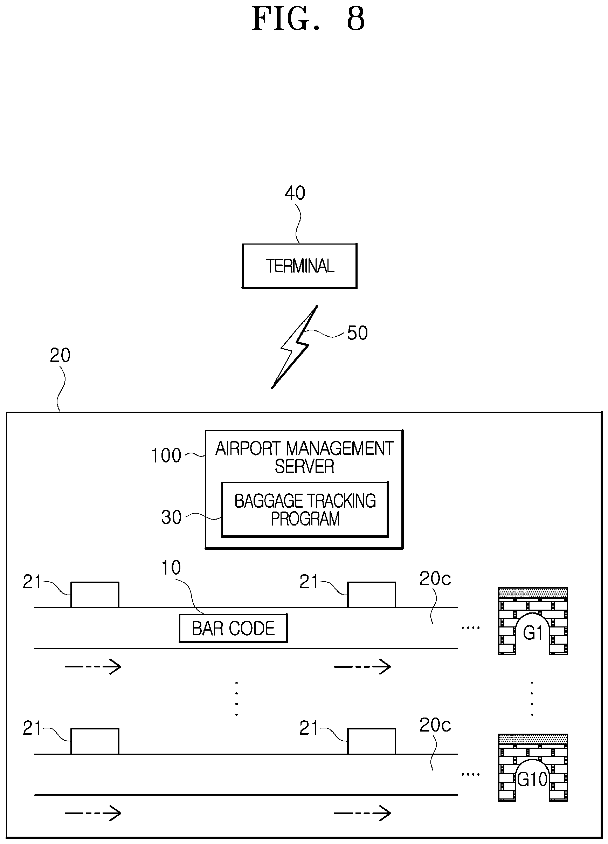

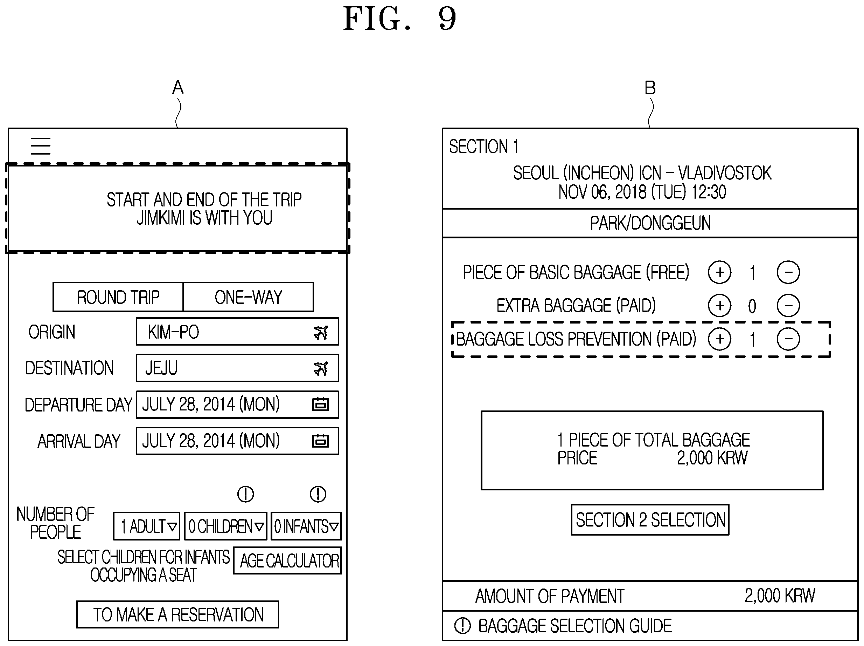

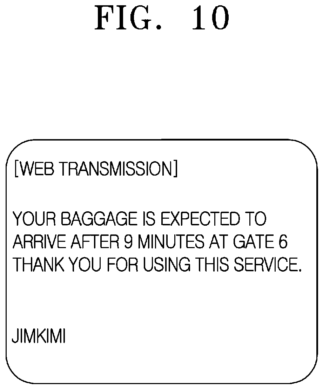

FIG. 8 is a view for describing a system for guiding a position of the baggage according to an embodiment of the present invention, FIG. 9 is an exemplary view illustrating a screen advertising and executing a baggage tracking program according to an embodiment of the present invention, and FIG. 10 is a view illustrating an example of a baggage information screen transmitted by a system for guiding a posion of the baggage according to an embodiment of the present invention.

Referring to FIG.8, the system for airport baggage management according to the embodiment of the present invention is connected to a baggage automatic handling system 20 having a plurality of conveyors 20c for automatically moving baggage to a gate and includes a barcode 10 installed on the baggage and storing information related to the baggage, a barcode reader 21 installed at one side of the conveyor 20c to recognize the barcode installed on the baggage passing therethrough, a baggage tracking program 30 configured to calculate a location of the baggage from a location of the barcode reader 21 installed on a location passed by the baggage having the barcode and a driving speed of the conveyor 20c and to transmit the calculated location information of the baggage to a terminal 40 of the passenger through a text message, a web-based text message, or a social network service (SNS), and the terminal 40 that accesses the baggage automatic handling system 20 through a wireless communication network 50 to receive the location information of the baggage and arrival gate information of the baggage.

The baggage automatic handling system 20 is a system that is installed at a current airport and automatically sorts baggage unloaded from an airplane and transmits the sorted baggage to a corresponding gate, and the baggage automatic handling system 20 includes the conveyor 20c automatically moving baggage and is provided with a computer for controlling driving of the conveyor 20c and processing baggage information.

The baggage tracking program 30 is installed on the computer provided in the baggage automatic handling system 20 as described above. The baggage tracking program 30 may be advertised with a banner advertisement (shown in a blue dotted line) on one side of a reservation screen to make a reservation for an airline ticket as shown in FIG. 2A and may be selected and installed by airlines or airport management companies. When the baggage tracking program 30 is installed through the banner advertisement, a baggage tracking execution screen as shown in FIG. 2B is displayed, and a service user may apply for baggage tracking for preventing baggage loss through the baggage tracking execution screen.

The baggage tracking program 30 serves to collect baggage information as described above and transmits the collected information to the terminal 40 of the passenger. The baggage information is obtained by analysis and comparison of baggage information previously input to the baggage automatic handling system 20 and information detected by the barcode reader 21.

Referring to FIG. 8, a plurality of the barcode readers 21 may be installed on one side of the conveyor 20c. The barcode reader 21 is a device for collecting movement information of the baggage, and when the conveyor 20c has a long length, a number of the barcode readers 21 may be installed on a single conveyor line, but preferably, the barcode reader 21 may be installed at each side of an entrance and an exit of the conveyor 20c.

That is, preferably, the barcode reader 21 may be installed at each side of an entrance of the conveyor 20c on which baggage unloaded from the airplane is loaded and a gate installed at the end of the conveyor 20c so that one of the conveyors 20c, loading the baggage, heading to a certain gate, and a gate number of the gate from which the baggage is output may be identified from the baggage tracking program 30.

When the conveyors 20c are connected to each other, the baggage may be moved to another place. Accordingly, the barcode reader may also be installed at a branch point of the conveyors 20c and, when the baggage moves to another conveyor, information about the movement is detected from the baggage tracking program 30 and the baggage automatic handling system 20 is notified so that a route of movement of the baggage may be changed.

In addition, in order to calculate more accurate baggage movement information and output information to the gate, the baggage tracking program 30 may track a moving location of the baggage from the time at which the baggage is loaded on the conveyor 20c and the moving speed of the conveyor 20c.

Hereinafter, a method of managing baggage using the system for airport baggage management according to the present invention configured as the above will be described.

First, in order to use an airport baggage management service according to the present invention, a passenger needs to sign up for the airport baggage management service using the terminal 40 of the passenger. The sign-up operation may be performed by entering, at minimum, personal information, a use ID, and a password, followed by accepting by a service provider as in a method of signing up for online services.

When a user uses the service, that is, when a user uses an airport, the user may apply for using the signed-up airport baggage management service, and when the application is completed, the baggage tracking program 30 compares user information with baggage information sent by the user and transmits the baggage information of the user to the terminal 40 of the passenger to confirm the user and, upon confirmation of the user, transmits location information of the baggage to the user later.

In this case, the baggage information may be transmitted as a text message to the user at a time when an image of the barcode 10 is captured, may be transmitted at regular intervals of set time, or may be transmitted in real time when desired by the user. For example, the baggage information may be transmitted to the user immediately after recognition of the barcode at regular intervals of time set in the system, or upon request for baggage information by the user.

The baggage tracking information may be information calculated by the baggage tracking program 30 using the location information of the barcode reader 21 having read the barcode 10 and the moving speed of the conveyor 20c.

The system and method for airport baggage management according to the present invention configured as the above calculates a required time using a distance between a gate and a conveyor belt that moves at a constant speed when baggage is sorted and moved to a destination by the baggage automatic handling system 20 and transmits the calculated required time to the user as a text message in real time. For example, the baggage automatic handling system 20 may transmit a text message, "Park's baggage is expected to arrive at gate C in 10 minutes," as shown in FIG. 3. The service user having received the text message may relive his or her anxiety about losing the baggage because the service user may recognize when (the time) and where (the place) the baggage is discharged in advance. As such, the present invention may transmit the baggage information to the user in real time so that the user may securely receive his or her baggage.

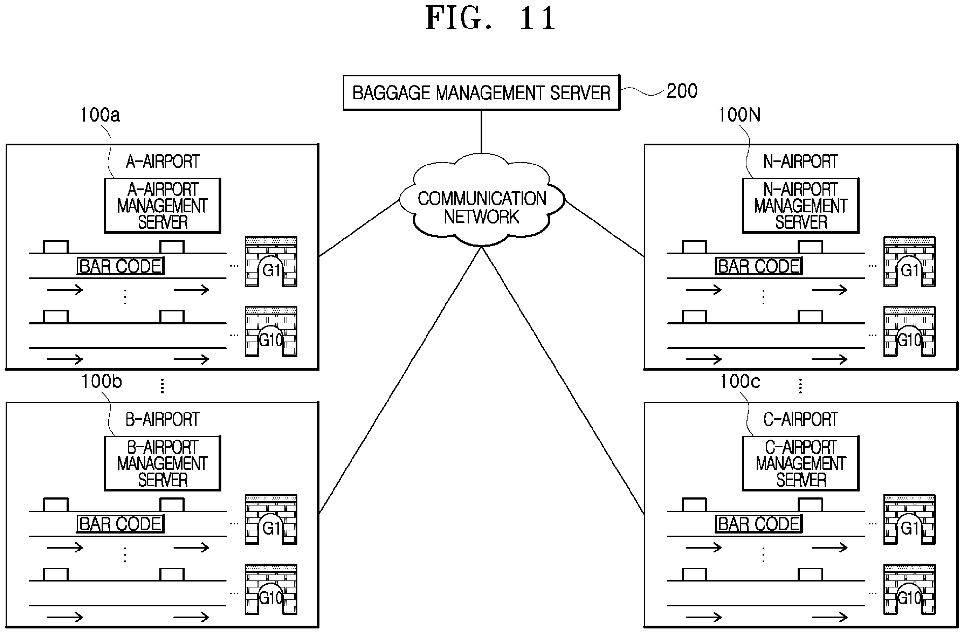

FIG. 11 is a view for describing a system for guiding a position of baggage according to another embodiment of the present invention.

Referring to FIG. 11, the system for guiding a position of baggage according to the embodiment of the present invention includes an electronic tag 10, a reader 21 installed at one side of a conveyor 20c to recognize the electronic tag 10 attached to baggage passing therethrough, an airport management server 100 (100a, 100b, ..., and lOOn), and a baggage management server 200, and the electronic tag 10, the reader 21, and the airport management server 100 are installed at each airport, and the baggage management server 200 manages the airport management server 100 installed at each airport.

The electronic tag 10 is attached to baggage of passengers, and the electronic tag 10 records baggage information including one or more of passenger identification information, baggage identification information, an origin, a destination, aircraft information (departure and transit), a departure time, an arrival time, and contents. The electronic tag 10 may include a barcode, a radio frequency identification (RFID) tag, and the like, but for the sake of convenience of description, the following description will be focused on a barcode.

A plurality of the readers 21 are installed at a predetermined interval on the conveyor 20c along which baggage of the passengers move. In general, at the airport, baggage of passengers travel through the conveyor 20c, so the readers 21 are installed at predetermined intervals in the vicinity of the conveyor 20c to identify the location of the baggage in real time.

The reader 21 is installed at one side of the conveyor 20c to automatically move the baggage to the gate and recognizes the barcode 10 attached to baggage passing therethrough to read baggage information of the baggage and transmits baggage recognition information to the airport management server 100. Here, the baggage recognition information includes reader identification information and the baggage information, and the reader identification information may be a unique ID of the reader 21.

The airport management server 100 receives the baggage recognition information from the reader 21, determines whether the baggage has arrived at the destination through the baggage recognition information, and when the baggage has arrived at the destination, calculates baggage location information from the reader identification information and the conveyor driving speed and transmits the calculated baggage location information to the terminal 40 of the corresponding passenger, and when the baggage has not arrived at the destination, transmits baggage misdelivery information including airport identification information and the baggage information to the baggage management server 200.

In detail, upon receiving the baggage recognition information, the airport management server 100 recognizes the destination through the baggage information and determines whether the recognized destination matches the current airport. The airport management server 100, when it is determined that the recognized destination matches the current airport, determines that the baggage has arrived at the destination, and when it is determined that the recognized destination does not match the current airport, determines that the baggage has arrived at another airport that is not the destination and has been misdelivered.

First, when the baggage has arrived at the destination, the airport management server 100 determines whether the baggage recognition information has been received within a predetermined time from an arrival time of the corresponding aircraft.

There may be a situation where baggage reception is delayed, such as when an error with baggage handling occurs at the departure airport so the baggage arrives at the destination airport later than the passenger or when baggage handling at the destination airport is delayed so the waiting time increases. In this case, the airport needs to inform the passenger of the baggage delay and the cause of the delay.

Accordingly, in order to determine whether baggage reception delay is likely to occur, the airport management server 100 determines whether baggage recognition information is received within a predetermined time. To this end, the airport management server 100 derives an actual arrival time of an aircraft in real time using an application programing interface (API) that uploads an expected time of arrival of an aircraft in real time. Thereafter, the airport management server 100 determines whether the baggage recognition information is received within a predetermined time (about 20 minutes) from the arrival time of the aircraft or a reader recognition time of the first baggage in the cabin. When it is determined that the baggage recognition information has been received within the predetermined time, the airport management server 100 calculates baggage location information from the reader identification information and the conveyor driving speed and transmits the calculated baggage location information to the terminal 40 of the corresponding passenger. That is, the airport management server 100 may identify the location of the corresponding reader through the reader identification information, thereby identifying the location of the baggage. In addition, the airport management server 100 may confirm the passenger who is the owner of the baggage through the baggage information and transmit the baggage location information to the passenger through the confirmation of the passenger. In this case, the airport management server 100 may transmit a text message as shown in FIG. 2 to the passenger to inform that the baggage has arrived normally.

In addition, the airport management server 100 may identify whether the baggage is moving along a correct route. The airport management server 100 generates baggage location information including a location of baggage, a time at the location, an expected time of arrival (an expected time of arrival at a gate where the passenger waits), and the like using an unique ID of the reader 21 and the baggage information and transmits the baggage location information to the terminal 40 of the passenger. In this case, the airport management server 100 may transmit the baggage location information in real time or periodically at predetermined time intervals.

When the baggage recognition information is not received within the predetermined time, the airport management server 100 transmits baggage delay guide information including the cause of baggage delay to the terminal 40 of the passenger.

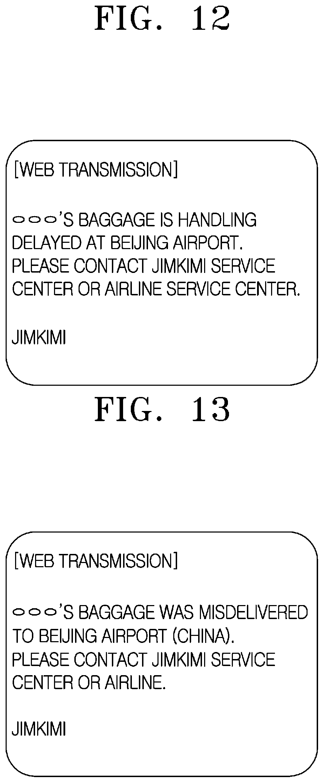

For example, when an error occurs during the baggage transportation at the departure airport (such as falling from the conveyor belt or the like), or when baggage is not loaded at the departure airport (a simple mistake, or when sent in the next aircraft due to insufficient space of the aircraft), or when the baggage handling in the aircraft with the passenger is delayed due to a large amount of waiting baggage or other errors after arrival at the destination airport, or when baggage falls from the conveyor belt, recognition fails, or other accidents occur after arrival at the destination airport, the baggage may be delayed. Here, when the baggage is delayed due to an error occurring during baggage transportation at the departure airport or due to a failure of baggage loading at the departure airport, the passenger may mostly identify the cause of the delay before arriving at the destination airport. When the baggage delay and the cause thereof are identified as such, the airport management server 100 may transmit baggage delay guide information to the passenger as a text message as shown in FIG. 12, for the passenger immediately after arriving at the destination airport or may transmit a notification via an application, a homepage, and the like to be viewed by the passenger. In addition, when the baggage arrives at the destination airport together with the passenger but baggage handling is delayed and the waiting time increases, the airport management server 100 transmits a text message to the passenger about the cause of the delay or delayed processing in real time or transmits a notification via an application, homepage, and the like so as to be viewed by the passenger.

As described above, when baggage departs from a destination route inside the airport (for example, a route to a gate where the passenger waits in the case of a destination airport or a route to an aircraft used by the passenger in the case of a departure airport), the airport management server 100 transmits a message indicating that the baggage has departed from the destination route in the airport to the terminal 40 of the passenger. In this case, the passenger may take a prompt action to prevent his or her baggage from being lost or stolen.

For example, the airport management server 100 at the departure airport may determine the location of the baggage in real time, and when the baggage does not move in the direction of the aircraft used by the passenger, may transmit a warning message to a manager or the terminal 40 of the passenger. In addition, the airport management server 100 at the destination airport may determine the location of the baggage in real time, and when the baggage departs from the conveyor belt or does not move in the direction of the gate where the passenger waits for the baggage, the airport management server 100 may transmit a warning message to a manager or the terminal 40 of the passenger.

Next, when the baggage has not arrived at the destination, the airport management server 100 transmits baggage misdelivery information including airport identification information and baggage information to the baggage management server 200. In this case, the airport management server 100 may transmit baggage misdelivery guide information to the terminal 40 of the corresponding passenger.

Baggage may be misdelivered to another airport instead of the destination airport, and the destination airport may include a transit airport or an arrival airport. In this case, an airport network is needed to manage the baggage that has been misdelivered to the other airport. To this end, the system according to the present invention includes the baggage management server 200 that is connected to each airport management server 100 and transmits baggage misdelivery guide information to the owner of the misdelivered baggage.

On the other hand, the misdelivered baggage may arrive at the misdelivery airport earlier than the time at which the corresponding passenger arrives at the destination airport or may arrive at the misdelivery airport later than the time at which the passenger arrives at the destination airport.

In a case that the baggage arrives at the misdelivery airport earlier than the time of arrival of the passenger at the destination airport, the airport management server 100 may notify that the baggage has been incorrectly delivered in response to the barcode 10 recognized at the misdelivery airport. The airport management server 100 transmits baggage misdelivery information to the baggage management server 200 to be shared with the baggage management server 200 and transmits baggage misdelivery guide information to the passenger as a text message shown in FIG. 139 or transmits a notification linked to an application or homepage for inquiry. With such a configuration, the passenger may immediately identify that his or her baggage has been misdelivered immediately after arriving at the destination airport and thus more rapidly and accurately handle the misdelivery baggage so that the risk of baggage loss is reduced.

Thereafter, in a case in which the baggage arrives at the misdelivery airport later than the time of arrival of the passenger at the destination airport, when the baggage is notified to have been misdelivered in response to the barcode 10 recognized at the misdelivery airport, the passenger may need to keep waiting at the airport where the baggage is not output and report a loss of the baggage to the airline. In order to prevent such a situation, upon an existence of baggage whose baggage recognition information has not been received within a predetermined time from an arrival time of the corresponding aircraft or from a reader recognition time of the first baggage carried in the cabin among pieces of baggage of passengers having registered the airport as a destination, the airport management server 100 of the destination airport transmits baggage misdelivery guide information to the terminal 40 of the passenger and transmits baggage tracking request information to the baggage management server 200. Here, the baggage tracking request information may include passenger identification information, baggage identification information, and the like.

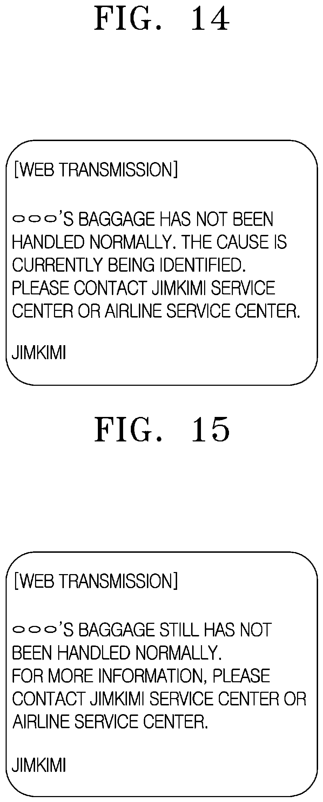

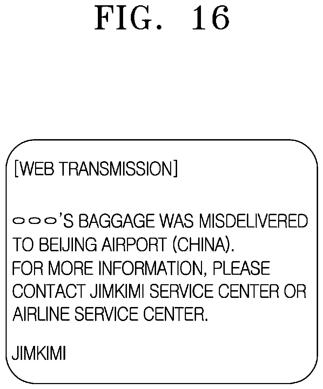

As described above, the airport management server 100 may transmit guide information that the baggage has not been normally handled to the passenger as shown in FIG. 14 when the baggage has normally arrived at the destination airport but the baggage has fallen from the conveyor belt or has not been recognized, may transmit guide information that the error has not been resolved when the error has not been resolved and has led to a delay as shown in FIG. 15, and may transmit guide information indicating that the problem has not been solved and transmit guide information that the error has been resolved when the error has been normally solved as shown in FIG. 16.

In addition, the airport management server 100, when the baggage arrives at the misdelivery airport and the barcode 10 of the baggage is recognized, may transmit misdelivery airport information (indicating an airport at which the baggage has arrived) to the passenger as a text message or transmit a notification as an application or homepage for inquiry. In addition, the airport management server 100 provides a service to be connected to a baggage management service center or an airline service center when baggage is misdelivered. With such a configuration, the passenger arrived at the destination airport may identify a loss of the baggage before reporting the loss of baggage, and the reporting process may be facilitated. In addition, when the baggage arrives at the misdelivery airport, the information about the misdelivery is immediately identified so that the time efficiency of the baggage handling can be improved.

In addition, the airport management server 100 may need to allow misdelivered baggage to be delivered to the passenger. Accordingly, the airport management server 100 searches for the earliest flight leaving the misdelivery airport for a destination (a destination airport) or a destination place set by the passenger and may transmit misdelivered baggage delivery schedule information including the found flight and an expected time of arrival of the flight to the terminal 40 of the passenger. In this case, the expected time of arrival of the found flight may be later or earlier than the expected time of arrival of the passenger at the destination. When the expected time of arrival of the found flight is later than the expected time of arrival of the passenger at the destination, the airport management server 100 may include a delivery place change menu in the misdelivered baggage delivery schedule information and transmit the misdelivered baggage delivery schedule information to the terminal 40 of the passenger. The passenger who has received the misdelivered baggage delivery schedule information may change an airport (a delivery place) to which the misdelivered baggage is to be delivered through the delivery place change menu.

For example, the following description will be made in relation to a case in which a passenger departs from a first airport and moves to a third airport via a second airport and baggage is misdelivered from the first airport to a fourth airport. In this case, the airport management server 100 at the fourth airport may search for a flight travelling from the fourth airport to the second airport and transmit misdelivered baggage delivery schedule information including the found flight, an expected time of arrival of the found flight, and a delivery place change menu to the terminal 40 of the passenger. The passenger may change the delivery place to the third airport through the delivery place change menu.

The airport management server 100 receives delivery place change information from the terminal 40 of the passenger and transmits misdelivered baggage delivery guide information including an earliest flight traveling to the changed delivery place and an expected time of arrival of the earliest flight to the terminal 40 of the passenger.

The terminal 40 of the passenger receives the baggage location information, the baggage delay guide information, and the baggage misdelivery guide information from the airport management server 100 or the baggage management server 200 and outputs the received baggage location information, baggage delay guide information, and baggage misdelivery guide information. In this case, the passenger may check the location of the baggage in real time (or periodically) and check the expected time of arrival of the baggage so that the passenger may perform other tasks up to the expected time of arrival of the baggage. In addition, the passenger may check that his or her baggage has been delivered to another airport through the baggage misdelivery guide information and take a corresponding prompt action, thereby preventing the baggage from being lost or stolen.

The terminal 40 of the passenger may be provided using various devices without limitation as long as the devices can access the system for airport baggage management through a communication network including a mobile communication terminal, a personal portable terminal, a personal computer, etc. to receive baggage information and user information, or receive logistics information from the airport management server 100 or the baggage management server 200 in the form of a short message, an e-mail, or the like.

The baggage management server 200 is connected to the airport management server 100 installed at each airport through a communication network and, upon receiving baggage misdelivery information from the airport management server 100, transmits baggage misdelivery guide information including information about an airport to which the baggage has been misdelivered to the terminal 40 of the passenger.

In addition, the baggage management server 200, upon receiving baggage tracking request information from the airport management server 100, transmits information related to a handling status of the baggage to the terminal 40 of the corresponding passenger. That is, the baggage management server 200 may track misdelivered baggage and transmit baggage location-related guide information to the terminal 40 of the corresponding passenger. In detail, the baggage management server 200 transmits baggage misdelivery guide information and then, at predetermined intervals of time (e.g., 10 to 30 minutes), transmits baggage handling status information to the passenger to continuously inform the passenger of the baggage handling process. In this case, the baggage management server 200 may transmit the baggage handling status information through a text message, a web-based text message, a voice message, an email, a social network service (SNS) service, and the like. With such a configuration, the passenger recognizes the situation that the baggage is continuously being searched for. The baggage handling status information may be refused as needed by the passenger.

In addition, the baggage management server 200 needs to allow misdelivered baggage to be delivered to the passenger. Accordingly, the baggage management server 200 may search for the earliest flight from the misdelivery airport to a destination (a destination airport) or a delivery place set by the passenger and transmit misdelivery baggage delivery schedule information including the found flight and an expected time of arrive of the flight to the terminal 40 of the passenger. In this case, when the expected time of arrival of the found flight is later than the expected time of arrival of the passenger at the destination, the baggage management server 200 may include a delivery place change menu in the misdelivered baggage delivery schedule information and transmit the misdelivered baggage delivery schedule information to the terminal 40 of the passenger. The passenger who has received the misdelivered baggage delivery schedule information may change the airport (a delivery place) to which the misdelivered baggage is to be delivered through the delivery place change menu. Then, when the baggage management server 200 receives the delivery place change information from the terminal 40 of the passenger, misdelivered baggage delivery guide information including the earliest flight to the changed delivery place and the expected time of arrival of the flight may be transmitted to the terminal 40 of the passenger.

The airport management server 100 or the baggage management server 200 may provide comprehensive information related to a check-in, a transit, and an arrival process of baggage performed at the airport. The provision of the comprehensive information is a service that enables passengers to identify whether baggage handling processes have been properly performed at each process, such as in courier delivery inquiry, allows the process of baggage handling to be viewed in detail, and in the event of a baggage accident, allows a section in which an error has occurred to be immediately identified. The service may be provided as a text message by default and may be provided in various ways, such as baggage management applications, homepages, and SNS.

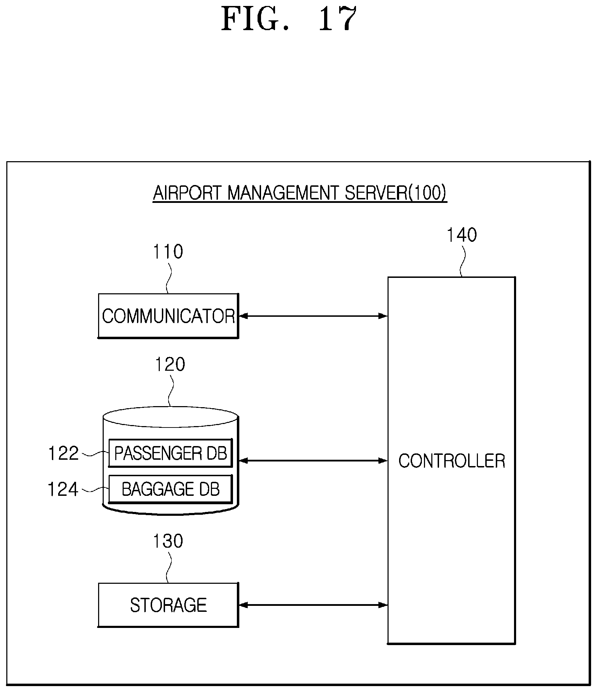

FIG. 17 is a block diagram for describing an airport management server according to an embodiment of the present invention.

Referring to FIG. 17, the airport management server 100 according to the embodiment of the present invention includes a communicator 110, a database 120, a storage 130, and a controller 140.

The communicator 110 communicates with the reader 21, the terminal 40 of the passenger, and the baggage management server 200 through a communication network.

The database 120 includes a passenger database 122 and a reader database 124. The passenger database 122 stores a passenger name, a terminal number, an origin, a destination, a flight, an existence of baggage to be sent, contents, and the like for each passenger. In addition, the reader database 124 stores information related to the location of each reader 21. Here, the information stored in the passenger database 122 is provided to be shared between airport management servers in airports. For example, for a certain passenger, the departure airport management server transmits passenger identification information of the passenger to the destination airport management server of the passenger to share the passenger information with the destination airport management server.

The storage 130 is a component which stores data related to the operations of the airport management server 100. Here, the storage 130 may be provided using a known storage medium, for example, one or more of well-known storage media, such as a read-only memory (ROM), a programmable read-only memory (PROM), an erasable programming ROM (EPROM), an electrically erasable programmable read-only memory (EEPROM), a random access memory (RAM), and the like. In particular, a baggage tracking program (an application or applet) may be stored in the storage 130, and the stored information may be selected by the controller 140 as needed.

The controller 140 receives baggage recognition information including reader identification information and baggage information through the communicator 110 and determines whether the baggage has arrived at the destination through the baggage recognition information. When it is determined that the baggage has arrived at the destination, the controller 140 determines whether the baggage recognition information has been received within a predetermined time from an arrival time of the corresponding aircraft, and when it is determined that the baggage recognition information has been received within the predetermined time, transmits baggage location information to the terminal 40 of the passenger. In this case, the controller 140 identifies the location of the reader 21 having the reader identification information using the reader database 124, identifies the current location of the baggage with the location of the reader 21, and transmits baggage location information including the time and the expected time of arrival corresponding to the current location of the baggage to the terminal 40 of the corresponding passenger.

When the baggage recognition information has not been received within the predetermined time, the controller 140 transmits baggage delay guide information including the cause of the baggage delay to the terminal 40 of the passenger. In this case, the controller 140 may identify the nationality of the passenger through the baggage recognition information and convert a language used in the baggage location information or the baggage delay guide information into a language used by the nationality or a language registered by the passenger and transmit the language-converted baggage location information or the language-converted baggage delay guide information.

In addition, when the baggage has not arrived at the destination, the controller 140 transmits baggage misdelivery information including airport identification information and baggage information to the baggage management server 200. In this case, the controller 140 needs to allow the misdelivered baggage to be delivered to the passenger. Accordingly, the controller 140 searches for the earliest flight from the misdelivery airport to the destination (the destination airport) or the delivery place set by the passenger and transmits misdelivered baggage delivery schedule information including the found flight and an expected time of arrival of the flight to the terminal 40 of the passenger.

In addition, the controller 140 determines whether the baggage of the corresponding passenger is moving along a correct destination route by identifying information related to the origin, the destination, and flight of the passenger from the passenger database 122. When the baggage departs from the destination route, the controller 140 transmits information indicating that the baggage has departed from the destination route to the terminal 40 of the passenger.

On the other hand, when the misdelivered baggage arrives at the destination airport at a delayed time, the passenger may be located at a place other than the destination airport. Accordingly, the controller 140 may receive information related to a baggage delivery place from the passenger and allow the baggage to be delivered to the corresponding delivery place. In this case, the controller 140 may provide a baggage reception place (for example, an airport terminal, etc.) located in the corresponding area for the passenger to select a delivery location from among the reception places or may allow the passenger to directly input a delivery location (an address).

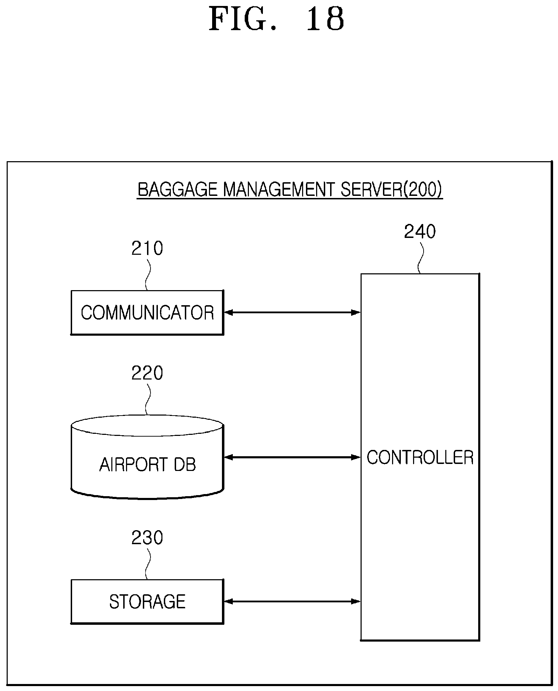

FIG. 18 is a block diagram for describing a baggage management server according to an embodiment of the present invention.

Referring to FIG. 18, the baggage management server 200 according to the embodiment of the present invention includes a communicator 210, an airport database 220, a storage 230, and a controller 240.

The communicator 210 performs communication with the terminal 40 of the passenger or the airport management server 100.

The airport database 220 stores passenger information in which a corresponding airport is registered as an origin, passenger information in which a corresponding airport is registered as a destination, and the like. Here, the passenger information stores a passenger name, a terminal number, an origin, a destination, a flight, an existence of baggage to be sent, contents, and the like for each passenger.

The storage 230 is a component which stores data related to the operations of the baggage management server 200. Here, the storage 230 may be provided using a known storage medium, for example, one or more of well-known storage media, such as a ROM, a PROM, an EPROM, an EEPROM, a RAM, and the like. In particular, a baggage tracking program (an application or applet) may be stored in the storage 230, and the stored information may be selected by the controller 240 as needed.

Upon receiving baggage misdelivery information through the communicator 210, the controller 240 transmits baggage misdelivery guide information including airport information of an airport to which the baggage has been misdelivered to the terminal 40 of the corresponding passenger.

In addition, the controller 240, after transmitting the baggage misdelivery guide information, transmits baggage handling status information to the passenger at predetermined interval of time (e.g., 10 to 30 minutes) to continuously inform the passenger of the baggage handling process. For example, the controller 240 may search for the earliest flight from the misdelivery airport to the destination (the destination airport) or the destination set by the passenger and transmit misdelivery baggage delivery schedule information including the found flight and the expected time of arrival of the flight to the terminal 40 of the passenger. In addition, when receiving delivery place change information from the terminal 40 of the passenger, the controller 240 may transmit misdelivered baggage delivery guide information including the earliest flight to the changed delivery place and the expected time of arrival of the flight to the terminal of the passenger. In this case, the controller 240 may transmit the baggage handling status information through a text message, a voice message, an email, an SNS service, and the like.

In addition, the controller 240 may identify the nationality of the passenger from the airport database 220 and convert a language used in the misdelivery guide information and the baggage handling status information into a language used by the nationality or a language registered by the passenger and transmit the language-converted misdelivery guide information and baggage handling status information.

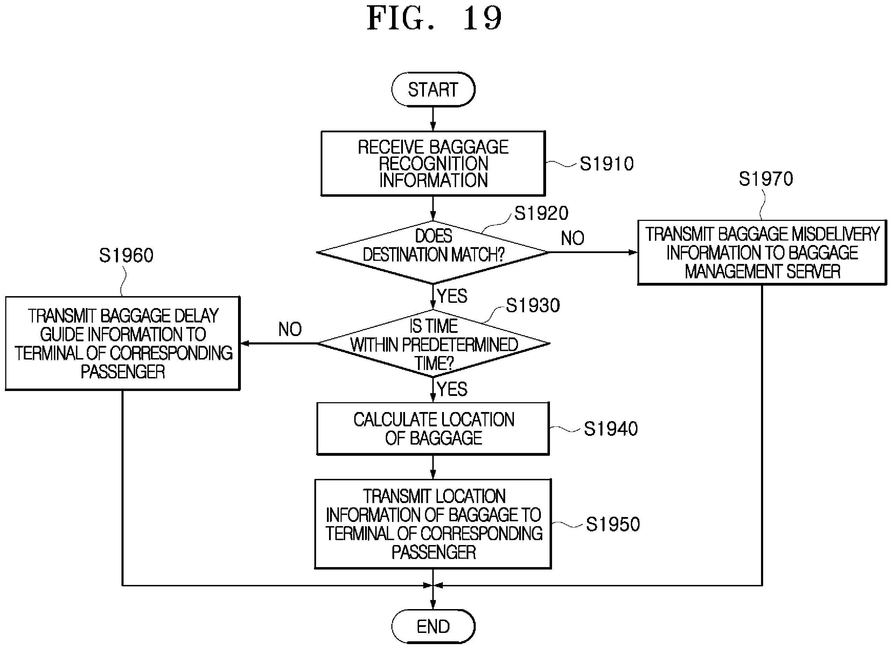

FIG. 19 is a view for describing a method of guiding a position of baggage according to an embodiment of the present invention.

Referring to FIG. 19, the airport management server 100, upon receiving baggage recognition information including reader identification information and baggage information from the reader 21 (S1910), determines whether the baggage has arrived at the destination through the baggage recognition information (S 1920).

When it is determined as a result of operation S1920 that the baggage has arrived at the destination, the airport management server 100 determines whether the baggage recognition information has been received within a predetermined time from the time of arrival of the corresponding aircraft (S1930). That is, the airport management server 100 determines whether the baggage recognition information has been received within the predetermined time to determine whether a situation in which baggage reception is delayed occurs.

When it is determined as a result of operation S1930 that the baggage recognition information has been received within the predetermined time, the airport management server 100 calculates baggage location information of the baggage from the reader identification information and the conveyor driving speed (S1940) and transmits the calculated baggage location information to the terminal of the corresponding passenger (S1950).

When it is determined as a result of operation S1930 that the baggage recognition information has not been received within the predetermined time, the airport management server 100 transmits baggage delay guide information including the cause of the baggage delay to the terminal 40 of the passenger (S1960).

When it is determined as a result of operation S1920 that the baggage has not arrived at the destination, the airport management server 100 transmits baggage misdelivery information including airport identification information and baggage information to the baggage management server 200 (S1970). In this case, the airport management server 100 may transmit baggage misdelivery guide information to the terminal 40 of the corresponding passenger.

The baggage management server 200 transmits the baggage misdelivery information to the terminal 40 of the corresponding passenger. Then, the baggage management server 200 may search for the earliest flight from the misdelivery airport to the destination (the destination airport) or the delivery place set by the passenger and transmit misdelivered baggage delivery schedule information including the found flight and the expected time of arrival of the found flight to the terminal 40 of the passenger. In this case, the expected time of arrival of the found flight may be later or earlier than the expected time of arrival of the passenger at the destination. When the expected time of arrival of the found flight is later than the expected time of arrival of the passenger at the destination, the baggage management server 200 may transmit the misdelivered baggage delivery schedule information including a delivery place change menu to the terminal 40 of the passenger. The passenger having received the misdelivered baggage delivery schedule information may change the airport (the delivery place) to which the misdelivered baggage is to be delivered through the delivery place change menu. When receiving the delivery place change information from the terminal 40 of the passenger, the baggage management server 200 may transmit misdelivered baggage delivery guide information including the earliest flight to the changed delivery place and the expected time of arrival of the flight to the terminal 40 of the passenger.

As described above, the system and method for guiding a position of baggage according to the embodiment of the present invention recognizes baggage information through an electronic tag attached to baggage to determine whether the baggage has arrived at the destination, and when the baggage has arrived at the destination, calculates baggage location information and transmits the calculated baggage location information to the terminal of the corresponding passenger, and when the baggage has not arrived at the destination, transmits baggage misdelivery guide information to the terminal of the passenger so that the passenger may identify the location of the baggage in real time (or periodically), and identify the expected time of arrival of the baggage to thereby perform other tasks during the remaining time and may identify whether his or her baggage has been delivered to another airport through the baggage misdelivery guide information and take a corresponding prompt action to prevent the baggage from being lost or stolen.

As is apparent from the above, the present invention allows information related to baggage to be notified to users through a text message so that not only customers using smartphones but also customers using 2G phones may be provided with services, and since the text messages convey a route of baggage movement, an exit gate of the baggage, and an expected time of arrival at the gate, users can receive baggage more easily.

In addition, the present invention allows texts of baggage information to be transmitted using various languages, such as English, Chinese, Japanese, and the like, so that users using various languages can easily identify the baggage information.

In addition, the present invention provides user with baggage information more rapidly and accurately, thereby improving the service quality of airlines, ensuring high quality services of low-cost airlines, preventing theft, and differentiating services between airports.

In addition, the present invention allows a passenger upon arriving at a destination airport to immediately identify that baggage of the passenger has been misdelivered so that misdelivered baggage can be more rapidly and accurately handled, thereby reducing a risk that baggage is lost.

In addition, the present invention allows baggage misdelivery information to be notified to a passenger in advance so that the passenger arriving at a destination airport can identify whether the baggage has been lost before reporting a loss of baggage, and the report of the loss can be further facilitated.

In addition, the present invention provides passengers with baggage location information, baggage delay guide information, baggage misdelivery guide information, and the like according to a baggage handling procedure so that the passengers can identify the baggage location in real time (or periodically), and identify an expected time of arrival of the baggage to thereby perform other tasks during the remaining time. In addition, the passenger can identify that the baggage of the passenger has been delivered to another airport through the baggage misdelivery guide information and take a corresponding prompt action, thereby preventing the baggage from being lost or stolen.

Although the present invention has been described with reference to the embodiments, the embodiments disclosed above should be construed as being illustrative rather than limiting the present invention, and those skilled in the art should appreciate that various substitutions, modifications, and changes are possible without departing from the scope and spirit of the present invention.

Therefore, the scope of the present invention is not defined by the above embodiments but by the appended claims of the present invention.

## Claims

1. A method for guiding a position of aircraft baggage, the method comprising:
by an airport management server, receiving baggage recognition information including reader identification information and baggage information of baggage from a reader and determining whether the baggage has arrived at a destination through the baggage recognition information;
by the airport management server, transmitting baggage misdelivery information including airport identification information and the baggage information to a baggage management server upon determining that the baggage has not arrived at the destination; and
by the baggage management server, transmitting information regarding a handling status of the baggage to the terminal of the passenger,
wherein the transmitting of the information regarding the handling status of the baggage to the terminal of the passenger includes, in a misdelivered baggage case,
by the baggage management server, searching for an earliest flight traveling from the airport to the destination or a delivery place set by the passenger and transmitting misdelivered baggage delivery schedule information including the found flight and an expected time of arrival of the found flight to the terminal of the passenger.

2. The method of claim 1, wherein the determining of whether the baggage has arrived at the destination includes:
determining, by the airport management server, whether the baggage recognition information has been received within a predetermined time from an arrival time of an aircraft corresponding to the baggage upon determining that the baggage has arrived at the destination;
calculating, by the airport management server, baggage location information of the baggage from the reader identification information and a driving speed of a conveyor and transmitting the calculated baggage location information of the baggage to the terminal of the passenger upon determining that the baggage recognition information has been received within the predetermined time; and
transmitting, by the airport management server, baggage delay guide information including a cause of baggage delay to the terminal of the passenger upon determining that the baggage recognition information has not been received within the predetermined time.

3. The method of claim 1, wherein the determining of whether the baggage has arrived at the destination includes:
transmitting, by the airport management server, the baggage misdelivery guide information to the terminal of the passenger upon an existence of baggage whose baggage recognition information has not been received within a predetermined time from an arrival time of an aircraft corresponding to the baggage or from a reader recognition time of first baggage carried in a cabin of the aircraft or upon an existence of baggage whose baggage recognition information has not been received until a baggage unloading process is completed among pieces of baggage of passengers having registered the airport as a destination; and
transmitting, by the airport management server, baggage tracking request information to the baggage management server.

4. The method of claim 1, wherein the transmitting of the information regarding the handling status of the baggage to the terminal of the passenger includes:
by the baggage management server, including a delivery place change menu in the misdelivered baggage delivery schedule information and transmitting the misdelivered baggage delivery schedule information to the terminal of the passenger when the expected time of arrival of the flight is later than an expected time of arrival of the passenger at the destination; and
transmitting misdelivered baggage delivery guide information including an earliest flight traveling to the changed delivery place and an expected time of arrival of the earliest flight to the terminal of the passenger upon receiving delivery place change information from the terminal of the passenger.

5. A system for guiding a position of aircraft baggage, the system comprising:
an electronic tag which is attached to baggage of each passenger and in which baggage information is stored;
a reader installed at one side of a conveyor that automatically moves the baggage to a gate to recognize the electronic tag attached to the baggage passing therethrough;
an airport management server installed at each airport and configured to receive baggage recognition information including reader identification information and baggage information from the reader, determine whether the baggage has arrived at a destination through the baggage recognition information, and, according to a result of the determination, transmit information of the position of the baggage to a terminal of the passenger corresponding to the baggage or transmitting baggage misdelivery information to a baggage management server; and
the baggage management server configured to be connected to the airport management server installed at each airport via a communication network,
wherein the airport management server or the baggage management server is configured to:
provide the passenger with baggage handling status information regarding at least one of check-in, transit, and arrival of the baggage that are performed in the corresponding airport; and
in a misdelivered baggage case, search for an earliest flight traveling from the airport to the destination or a delivery place set by the passenger, and transmit misdelivered baggage delivery schedule information including the found flight and an expected time of arrival of the found flight to the terminal of the passenger.

6. The system of claim 5, wherein the airport management server, upon determining that the baggage has arrived at the destination, determines whether the baggage recognition information has been received within a predetermined time from an arrival time of an aircraft corresponding to the baggage and, upon determining that the baggage recognition information has been received within the predetermined time, calculate baggage location information of the baggage from the reader identification information and a driving speed of the conveyor and transmit the calculated baggage location information of the baggage to the terminal of the passenger, and upon determining that the baggage recognition information has not been received within the predetermined time, transmits baggage delay guide information including a cause of baggage delay to the terminal of the passenger.

7. The system of claim 6, wherein the airport management server identifies a nationality of the passenger through the baggage recognition information and converts a language used in the baggage location information or the baggage delay guide information into a language used by the nationality or a language previously registered by the passenger and transmits the language-converted baggage location information or baggage delay guide information.

8. The system of claim 5, wherein the airport management server, upon determining that the baggage has not arrived at the destination, transmits baggage misdelivery guide information including the airport identification information of the airport to which the baggage has been misdelivered to the terminal of the passenger.

9. The system of claim 5, wherein the airport management server transmits baggage misdelivery guide information to the terminal of the passenger upon an existence of baggage whose baggage recognition information has not been received within a predetermined time from an arrival time of an aircraft corresponding to the baggage or from a reader recognition time of first baggage carried in a cabin of the aircraft or upon an existence of baggage whose baggage recognition information has not been received until a baggage unloading process is completed among pieces of baggage of passengers having registered the airport as a destination, and transmits baggage tracking request information to the baggage management server.

10. The system of claim 9, wherein the baggage management server, upon receiving the baggage tracking request information, transmits information related to a handling status of the baggage to the terminal of the passenger.

11. The system of claim 5, upon receiving the baggage misdelivery information from the airport management server, the baggage management server transmits baggage misdelivery guide information including airport identification information of an airport to which the baggage has been misdelivered to the terminal of the passenger.

12. The system of claim 5, wherein the airport management server or the baggage management server is configured to:
when the expected time of arrival of the flight is later than an expected time of arrival of the passenger at the destination, transmit the misdelivered baggage delivery schedule information including a delivery place change menu to the terminal of the passenger; and
upon receiving delivery place change information from the terminal of the passenger, transmit misdelivered baggage delivery guide information including an earliest flight traveling to the changed delivery place and an expected time of arrival of the earliest flight to the terminal of the passenger.

13. The system of claim 5, wherein the reader is installed at each of an entrance and an exit of the conveyor to identify a conveyor line to which the baggage is input and a gate from which the baggage is output.

14. The system of claim 5, wherein the baggage management server identifies a nationality of the passenger through the baggage misdelivery information and converts a language used in the baggage misdelivery guide information into a language used by the nationality or a language previously registered by the passenger and transmits the language-converted baggage misdelivery guide information.
